# EUROPEAN PATENT SPECIFICATION

(11) **EP 1 832 844 B1**
(45) Date of publication and mention of the grant of the patent: **04.11.2009**
(21) Application number: 07103827.7
(22) Date of filing: 09.03.2007
(51) Int. Cl.: G01C 21/34, G08G 1/0968

(54) **Navigation system**
Navigationssystem
Système de navigation

(30) Priority: 09.03.2006 JP 2006063545
(43) Date of publication of application: 12.09.2007
(73) Proprietor: AISIN AW CO., LTD., Anjo-shi, Aichi 444-1192 (JP)
(72) Inventor: Nagase, Kenji, Okazaki Aichi 444-8564 (JP); Tomita, Hiroshi, Okazaki Aichi 444-8564 (JP); Minami, Toshiaki, Okazaki Aichi 444-8564 (JP); Nakada, Takayasu, Okazaki Aichi 444-8564 (JP)
(74) Representative: TBK-Patent

(56) References cited:
- EP-A- 1 491 857
- EP-A1- 0 803 853
- JP-A- 2002 341 758
- US-A1- 2003 033 082
- US-A1- 2005 246 096
- US-A1- 2006 009 904

## Description

The present invention relates to a navigation system for providing guidance when needed regarding traffic lanes when a passing lane, a climbing lane, or a lane for slower traffic becomes within a predetermined distance and, in particular, for improving ease of driving for a driver.

In recent years, navigation apparatuses for enabling a driver of a vehicle to easily navigate to a destination have become very popular. Such a navigation apparatus detects a current position of the vehicle by means of a GPS receiver, obtains map data corresponding to the current position through a data storage medium such as a DVD-ROM or an HDD, or a network, and displays the map on an LCD monitor. The navigation apparatus provides traffic guidance when the vehicle with the navigation apparatus approaches an intersection, a passing lane, a climbing lane, or a lane for slower traffic and the guidance supports the driver so that the driver can drive comfortably. For example, a navigation apparatus disclosed in the patent document (Japanese Unexamined Patent Application Publication No. 2002-341758) provides advance traffic lane information to a driver by means of images and/or audio guidance when there is traffic lane information that the driver should be made aware of such as information about a climbing lane or a passing lane according to a route to a searched destination.

Document US 2003/0033082 discloses a navigation system that advises a driver to overtake a vehicle ahead if this is possible.

The navigation apparatus disclosed in the patent document provides guidance regarding traffic lanes every time the vehicle approaches a climbing lane or a passing lane on the basis of the vehicle position data and map data. However, there are times the driver does not need such guidance regarding traffic lanes, depending on the situation in which the vehicle travels. For example, it is unnecessary to provide guidance regarding traffic lanes such as a passing lane, a climbing lane, or a lane for slower traffic when heavy traffic is present because the driver cannot change traffic lanes. It is also unnecessary to provide guidance regarding traffic lanes when there is no vehicle other than the driver's vehicle because the driver's vehicle may not obstruct traffic or there is no vehicle to obstruct the driver's vehicle, that is, the driver does not have to change traffic lanes. If the navigation apparatus keeps providing guidance regarding traffic lanes whatever the situation is, it might cause the driver to lose concentration. In fact, some users think that unnecessary guidance is bothersome.

Accordingly, it is an object for the present invention to provide a navigation system for providing guidance regarding a passing lane, a climbing lane, or a lane for slower traffic when needed and for improving convenience of a user.

This problem is solved by a navigation system as outlined in the attached claims.

According to the navigation system with the structure as recited in the claims, when a vehicle approaches a passing lane, a climbing lane, or a lane for slower traffic within a predetermined distance, the navigation system detects distances between the vehicle and other vehicles near the vehicle and provides guidance regarding traffic lane on the basis of the detected distances. Therefore, it may be possible to provide guidance regarding traffic lane when needed on the basis of positional relationships of vehicles around the vehicle. No guidance is provided when the vehicle does not need guidance regarding traffic lane, so that a driver of the vehicle may drive without increasing his/her level of distraction and it may reduce the data processing burden related to guidance on the navigation system.

The navigation system detects a vehicle speed when a vehicle approaches a passing lane, a climbing lane, or a lane for slower traffic within a predetermined distance, and provides guidance regarding the traffic lane on the basis of the detected vehicle speed. Therefore, it may be possible to provide guidance regarding traffic lane when needed on the basis of speed relationships of vehicles around the vehicle. No guidance is provided when the vehicle does not need guidance regarding traffic lane, so that the driver of the vehicle may drive without increasing his/her level of distraction.

The navigation system detects following/leading distances and speeds of vehicles around the vehicle when a vehicle approaches a passing lane, a climbing lane, or a lane for slower traffic within a predetermined distance, and provides guidance regarding traffic lane on the basis of the detected following/leading distances and the vehicle speeds. Therefore, it may be possible to provide guidance regarding traffic lane when needed on the basis of position relationships and speed relationships of vehicles around the vehicle. No guidance is provided when the vehicle does not need guidance regarding traffic lane, so that the driver of the vehicle may drive without increasing his/her level of distraction.

The navigation system provides guidance regarding a climbing lane or a lane for slower traffic when it is determined that the leading distance to the vehicle in the rear of the vehicle is equal to or less than a predetermined distance. When the vehicle should change the traveling traffic lane to the climbing lane or the lane for slower traffic not to obstruct the vehicle behind, the navigation system may provide guidance. As a result, it may increase convenience of the user.

The navigation system provides guidance regarding a passing lane when it is determined that the following distance to the vehicle ahead of the vehicle is equal to or less than a predetermined distance. When the vehicle should change the traveling traffic lane to the passing lane not to be obstructed by the vehicle ahead of the vehicle, the navigation system may provide guidance. As a result, it may increase convenience of the user.

The navigation system obtains congestion information when a vehicle approaches a passing lane, a climbing lane, or a lane for slower traffic within a predetermined distance, and provides guidance regarding traffic lane on the basis of the detected distances and the vehicle speeds as well as the obtained congestion information. Therefore, it may be possible to provide guidance regarding traffic lane when needed on the basis of the congestion on a link in which the vehicle is currently traveling. No guidance is provided when the vehicle does not need guidance regarding traffic lane, so that the driver of the vehicle may drive without increasing his/her level of distraction.

When it is determined that the link on which the vehicle is currently traveling is congested, the navigation system does not provide guidance regarding traffic lane even if the vehicle has approached a passing lane, a climbing lane, or a lane for slower traffic within a predetermined distance. No guidance is provided when the vehicle does not need guidance regarding traffic lane such as when the driver can not change traffic lanes, so that a driver of the vehicle may drive without increasing his/her level of distraction and it may reduce the data processing burden related to guidance on the navigation system.

The navigation system obtains congestion information when a vehicle approaches a passing lane, a climbing lane, or a lane for slower traffic within a predetermined distance, and provides guidance regarding traffic lane on the basis of the obtained congestion information. Therefore, it may be possible to provide guidance regarding traffic lane when needed on the basis of the congestion on the link in which the vehicle is currently traveling. No guidance is provided when the vehicle does not need guidance regarding traffic lane, so that the driver of the vehicle may drive without increasing his/her level of distraction.

FIG. 1 is a diagram showing a structure outline of a navigation system according to the current embodiment of the invention.

FIG. 2 is a block diagram showing a frame format of a control system in the navigation system according to the current embodiment of the invention.

FIG. 3 is a flowchart showing a first traffic lane guidance processing program according to the current embodiment of the invention.

FIG. 4 is a diagram showing a frame format of a position relationships between a vehicle which is traveling from a main line to a climbing lane and vehicles which are traveling around the vehicle at a given time.

FIG. 5 is a flowchart showing a second traffic lane guidance processing program according to the current embodiment of the invention.

FIG. 6 is a diagram showing a frame format of a position relationships between a vehicle which is traveling from a main line to a passing lane and vehicles which are traveling around the vehicle at a given time.

A navigation system according to an embodiment of the present invention is described below with reference to the attached figures.

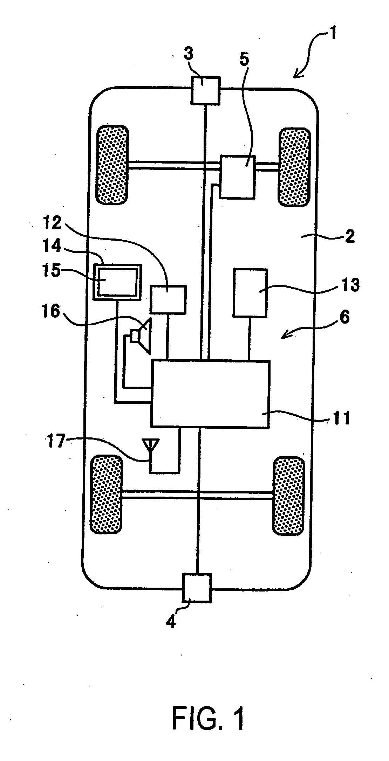

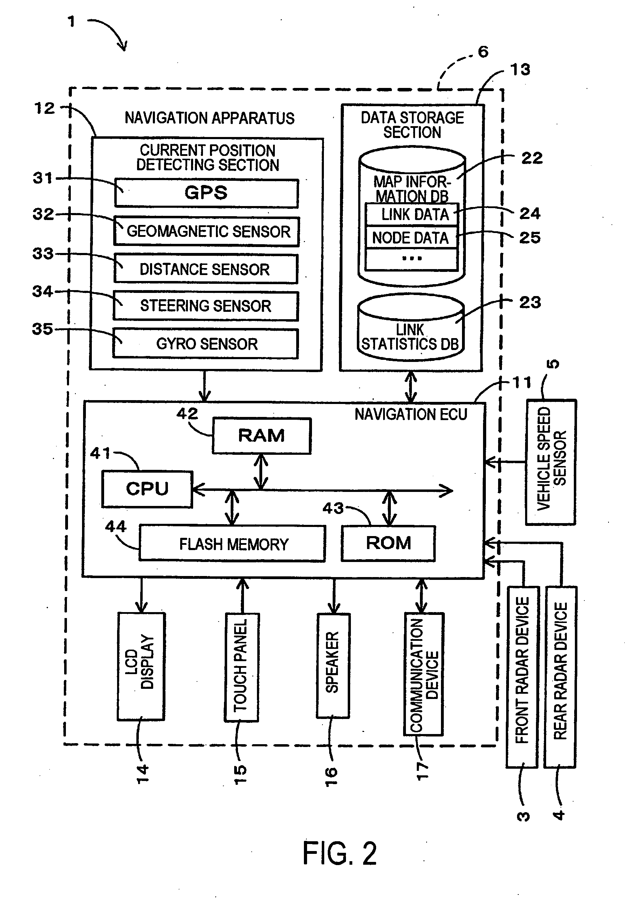

First, a structural outline of a navigation system 1 according to the current embodiment is described with reference to FIGs. 1 and 2. FIG. 1 is a diagram showing the structural outline of the navigation system 1 according to the current embodiment. FIG. 2 is a block diagram showing a control system of the navigation system 1 according to the current embodiment.

As shown in FIGs. 1 and 2, the navigation system 1 of the current embodiment may include a front radar device (following distance detecting means) 3, a rear radar device (leading distance detecting means) 4, a vehicle speed sensor (vehicle speed detecting means) 5, and a navigation apparatus 6 mounted on a vehicle 2. The navigation apparatus 6 may further include a navigation ECU (approach detecting means, leading distance determining means, following distance determining means, congestion determining means) 11, a current position detecting section (vehicle position detecting means) 12, a data storage section (map data storage means) 13, an LCD display (traffic lane guidance means) 14, a touch panel 15, a speaker (traffic lane guidance means) 16, and a communication device (congestion information obtaining means) 17.

The front radar device 3 is attached at the center of the upper side of a front car registration plate on the vehicle 2 and may include a radio wave transmitter and a radio wave receiver. The radio wave transmitter radiates a radio wave to in front of the vehicle 2 and the radio wave reflected off an object in front of the vehicle 2 (more specifically, another vehicle) is received by the radio wave receiver. As a result, it may be possible to detect a distance between the vehicle 2 and a vehicle ahead and a relative speed on the basis of the strength and wavelength of the reflected wave.

The rear radar device 4 is attached at the center of the upper side of a rear car registration plate on the vehicle 2 and may include a radio wave transmitter and a radio wave receiver as in the case of the front radar device 3. The radio wave transmitter radiates a radio wave from the rear of the vehicle 2 and the radio wave reflected off an object to the rear of the vehicle 2 (more specifically, another vehicle) is received by the radio wave receiver. As a result, it may be possible to detect a distance between the vehicle 2 and a vehicle behind and a relative speed on the basis of the strength and wavelength of the reflected wave.

The vehicle speed sensor 5 is a sensor for detecting a travel distance of the vehicle or the vehicle speed. The vehicle speed sensor 5 produces a pulse according to a rotation of wheels of the vehicle 2 and outputs the pulse signal to the navigation ECU 11. The navigation ECU 11 calculates the rotational speed of the wheels and the travel distance by counting the produced pulses.

Next, each element of the navigation apparatus 6 will be described. The current position detecting section 12 may include a GPS 31, a geomagnetic sensor 32, a distance sensor 33, a steering sensor 34, a gyro sensor 35 as a direction detecting section, and an altimeter (not shown), and may detect a position, a direction, and/or a distance to an object (for example, an intersection) in relation to the current vehicle 2.

More specifically, the GPS 31 detects a current vehicle position of the vehicle 2 and a current time by receiving an electric wave provided by a satellite, the geomagnetic sensor 32 detects a vehicle direction on the basis of measuring the earth's magnetic field, and the distance sensor 33 detects a distance between predetermined points on a road. For example, as the distance sensor 33, a sensor for measuring a rotational speed of vehicle wheels (not shown) and detecting a distance on the basis of the rotational speed or another sensor for measuring an acceleration, integrating the acceleration twice, and determining the distance may be used.

The steering sensor 34 detects a steering angle of the vehicle. For example, an optical rotation sensor or a rotation resistance sensor attached on a rotating part of a steering wheel (not shown), or an angle sensor attached to a wheel may be used as the steering sensor 34.

The gyro sensor 35 detects an angle of traverse of the vehicle. For example, a gas-rate gyro or a vibration gyro may be used as the gyro sensor 35. Also, the direction of the vehicle may be detected by integrating the angle of traverse detected by the gyro sensor 35.

The data storage section 13 may include a hard disk (not shown) as an external storage device and as a storage medium, a map information DB 22 and a link statistics DB 23 which are stored in the hard disk, and a storage head (not shown) as a driver for reading out a predetermined program or for writing predetermined data on the hard disk. Note that, according to the current embodiment, the hard disk is used as the external storage device and the storage media of the data storage section 13. However, a magnetic disk such as a flexible disk may be used as the external storage device instead. Further, a memory card, a magnetic tape, a magnetic drum, a CD, an MD, a DVD, an optical disc, an MO, an IC card, or an optical card may be used as the external storage device as well. Note that, the map information DB 22 and the link statistics DB 23 will be described in detail later.

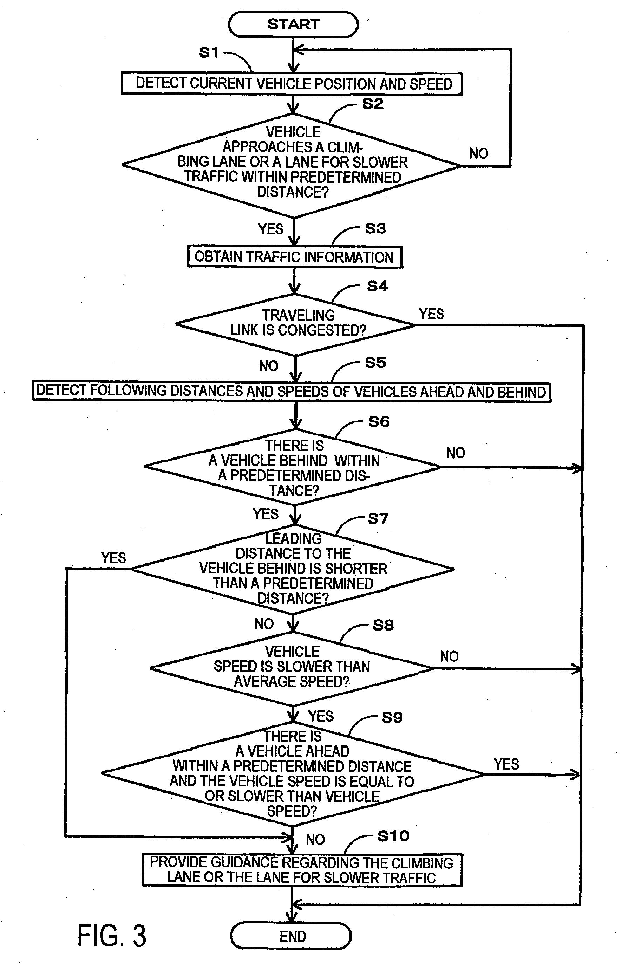

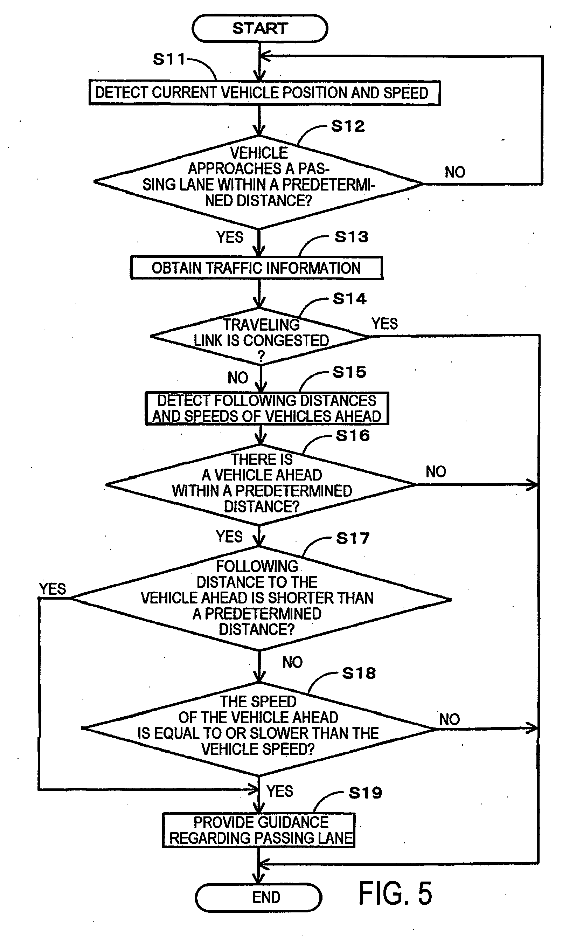

The navigation ECU (Electronic Control Unit) 11 may include a CPU 41 as a calculating device and a control device for controlling the entire navigation apparatus 6, a RAM 42 for being used as a working memory when the CPU 41 executes various types of calculations and for storing route data according to a searched route, a ROM 43 for storing a control program, a first traffic lane guidance processing program (FIG. 3), and a second traffic lane guidance processing program (FIG. 5), and an internal storage device such as a flash memory 44 for storing a program read out from the ROM 43. The first traffic lane guidance processing program is a program for providing guidance regarding traffic lanes, provided that predetermined conditions are met when the vehicle approaches a climbing lane or a lane for slower traffic within a predetermined distance. The second traffic lane guidance processing program is a program for providing guidance regarding traffic lanes, provided that predetermined conditions are met when the vehicle approaches a passing lane within a predetermined distance. Note that, a semiconductor memory or a magnetic core memory may be used as the RAM 42, the ROM 43, or the flash memory 44. Also, an MPU may be used as the calculating device and the control device instead of the CPU 41.

According to the current embodiment, various programs are stored in the ROM 43 and various data is stored in the data storage section 13. However, programs and data may be read out from the same external storage device or a memory card and may be written on the flash memory 44, so that the programs and data may be updated by replacing the memory card.

The LCD display 14 is display means for displaying, for example, an operation guidance, an operation menu, a key guidance, a route from a current position to a destination, guidance information along the route, traffic information, news, a weather report, date and time, mails, and/or TV programs. In particular, in the navigation apparatus 6 of the current embodiment, characters and/or symbols for providing guidance regarding a traffic lane when the vehicle approaches a passing lane, a climbing lane, or a lane for slower traffic within a predetermined distance may be displayed on the LCD display 14. Note that, a CRT display, a plasma display, or a hologram device for projecting hologram images on a windshield of the vehicle may be used instead of the LCD display 14.

The touch panel 15 is attached on the front side of the LCD display 14. When the user touches the touch panel 15, the coordinates of the point where the user touched are specified and it may be determined where the user touched and what points the user touched after the initially touched point on the touch panel on the basis of the detected coordinates. Note that, a keyboard, a mouse, a remote control device, a joystick, a light pen, or a stylus pen may be used instead of the touch panel 15.

The speaker 16 outputs an audio guidance for a traveling route on the basis of the direction supplied from the navigation ECU 11. For example, the audio guidance may be "Please turn right at XX intersection 300 m ahead." or "The climbing lane is coming up." In particular, in the navigation apparatus 6 according to the current embodiment, an audio guidance regarding a traffic lane is output when the vehicle approaches a passing lane, a climbing lane, or a lane for slower traffic within a predetermined distance. Note that, the audio guidance output from the speaker 16 may be not only a synthetic sound but various types of sound effects or various guidance information prerecorded on a tape or a memory.

The communication device 17 is a beacon receiver for receiving traffic information, for example, congestion information, regulation information, parking area information, and traffic accident information transferred from a traffic information center such as VICS (®: Vehicle Information and Communication System) as an electric wave or an optical wave through an electric wave beacon device or an optical wave beacon device which is located along roads. As the communication device 17, for example, a network device for communicating through a network such as an LAN, a WAN, an intranet, a mobile phone line network, a telephone line network, a public communication network, a private communication network, or the Internet may be used. The communication device 17 may include an FM receiver, so that not only information from the information center but also FM broadcast information such as news and a weather report may be received as an FM broadcast through an FM broadcast station. Note that, the beacon receiver and the FM receiver may be unitized and mounted as a VICS receiver. However, the beacon receiver and the FM receiver may be mounted individually if needed.

Next, the map information DB 22 stored in the data storage section 13 will be described. In the map information DB 22, map data needed for route guidance and a map display is stored. For example, map display data for displaying a map, intersection data, link data 24 regarding roads (road links), node data 25 regarding node points, search data for searching for a route, facility data regarding facilities, and/or detection data for detecting points may be included in the map information DB 22.

As link data 24, data regarding road links forming roads, data regarding a corner, data regarding a road attribute, and/or data regarding a road type may be stored. The data regarding road links may include data indicating a width of a road formed by links, a grade, a cant, a bank, a condition of a road surface, the number of traffic lanes, a point where the number of traffic lanes decreases, a point where a road becomes narrow, and/or a crossing place. The data regarding corner may include data indicating a curvature radius, an intersection, a T-shaped intersection, and/or a start/end point of a corner. The data regarding road attribute may include data indicating a passing lane, a climbing lane, and a lane for slower traffic. The data regarding road type may include data indicating a national road, a prefectural road, a narrow street, a highway, an urban highway, a tollway, and/or a toll bridge. Further, according to such tollways, data regarding an entrance/exit of the tollways (a ramp way) and a tollbooth (an interchange) may be included. As link data for traffic lanes, data indicating a starting/ending point of a passing lane, a climbing lane, or a lane for slower traffic may be stored.

As node data 25, coordinates (position) of a node point such as a fork in a road (including an intersection and a T-shaped intersection) or points which are set on a road at intervals of a predetermined distance depending on a curvature radius of the road, a node attribute indicating whether a node is on an intersection, a connected link number list for listing link IDs of links which are connected to nodes, an adjoining node number list for listing node numbers of adjoining nodes of a link, and/or a height of a node point (altitude) may be stored.

Search data is used for searching for a route to a set destination and displaying the route. For example, search data may include route display data for displaying a travel time necessary for passing through a link and a route selected by a route search on an LCD display 14. Cost data may also be included in search data. Cost data is used for calculating a search cost such as a cost necessary for passing through a node (hereinafter referred to as node cost) and a cost for a link forming a road (hereinafter referred to as link cost).

Node cost is basically set for a node at an intersection. In the navigation apparatus 6 of the current embodiment, a value of a node cost is determined on the basis of, for example, an existence or nonexistence of a traffic light, a travel direction of the vehicle when the vehicle passes through an intersection (that is, a right/left turn at the intersection).

Link cost is determined on the basis of data regarding a road attribute, a road type, a width of a road, the number of traffic lanes on a link, and/or a length of a link.

As facility data, data regarding, for example, a hotel, a hospital, a gas station, a parking area, a sightseeing facility, an interchange, a restaurant, and a service area in various areas is stored in association with facility IDs to specify such facilities. Note that, audio output data to output certain information from the speaker 16 of the navigation apparatus 6 is stored in the map information DB 22.

According to the current embodiment, the navigation apparatus 6 searches for a route from both sides, that is, from a starting point and from a destination, along links and nodes in map data. At the point where the search started from the starting point overlaps with the search started from the destination, the search cost (the node cost and the link cost) accumulated from the starting point is added to the search cost accumulated from the destination point, that is, the total cost of the route is calculated. Then a route with the minimum total cost is set as the route for which guidance is to be given.

Next, a link statistics DB 23 stored in the data storage section 13 will be described. The link statistics DB 23 is a DB in which map data such as an average link travel time, an average vehicle speed, and/or a congestion degree of a link is stored. The navigation ECU 11 calculates a travel time necessary for traveling to a set destination and a predicted arrival time at the destination on the basis of the average link travel time stored in the link statistics DB 23 and provides guidance. The navigation ECU 11 further coordinates link costs for route searching on the basis of the congestion degree. In the navigation system 1 of the current embodiment, before guidance regarding a climbing lane or a lane for slower traffic is provided, the navigation system 1 compares the vehicle speed of the vehicle with the average vehicle speed on a link and determines whether the guidance regarding a traffic lane should be provided (S8 in FIG. 3) .

Data in the map information DB 22 and the link statistics DB 23 may be updated when information is transferred from a storage medium such as a DVD and/or an external device, for example, a memory card, or when information is downloaded from a specified information center through the communication device 17.

Next, a first traffic lane guidance processing program executed by the navigation ECU 11 of the navigation system 1 with the structure described above will be described with reference to FIG. 3. FIG. 3 is a flowchart showing the first traffic lane guidance processing program of the current embodiment. The first traffic lane guidance processing program is executed at predetermined intervals (for example, at 4 m intervals) after the ignition switch of the vehicle is turned on. The program is for providing guidance regarding a traffic lane when the vehicle approaches a climbing lane or a lane for slower traffic within a predetermined distance, provided that certain conditions are met. Note that, the program described in flowcharts of FIGs. 3 and 5 is stored in the RAM 42 or the ROM 43 of the navigation apparatus 6 and is executed by the CPU 41.

In the first traffic lane guidance processing program, the CPU 41 detects the current vehicle position and the travel direction by means of the current position detecting section 12 in Step 1 (hereinafter referred to as S1) and further detects the vehicle speed by counting pulses output from the vehicle speed sensor 5.

In S2, the CPU 41 determines whether the vehicle has approached a start point of a climbing lane or a lane for slower traffic within a predetermined distance (500 m in the current embodiment) on the basis of map data stored in the map information DB 22. Note that, the processing in S1 and S2 is equal to the processing executed by the approach detecting means.

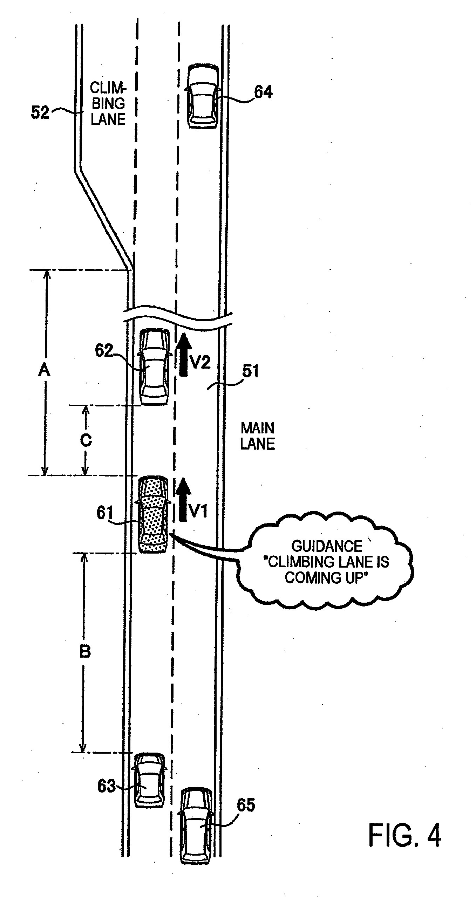

FIG. 4 is a diagram showing a positional relationship between a vehicle 61, which is traveling from a main lane 51 to a climbing lane 52, and other vehicles 62 through 65, which are traveling around the vehicle 61, at a given time. In the processing of S2 described above, it is determined whether a distance A between the starting point of the climbing lane 52 and the vehicle 61 is equal to or less than a predetermined distance (500 m in the current embodiment).

When it is determined that the vehicle is more than the predetermined distance away from the starting point of the climbing lane or the lane for slower traffic (S2=NO), the procedure returns to S1 and a current vehicle position is detected again. When it is determined that the vehicle has approached the starting point of the climbing lane or the lane for slower traffic within the predetermined distance (S2=YES), the procedure goes to S3.

The CPU 41 obtains traffic information from, for example, the traffic information center through the communication device 17 in S3. Note that, traffic information obtained in S3 may include congestion information, in particular, for specifying a congestion condition of a link.

Next in S4, the CPU 41 determines whether a link in which the vehicle is currently traveling is congested on the basis of traffic information obtained in S3. When it is determined that the link is congested (S4=YES), it is predictable that the driver of the vehicle cannot change traffic lanes even if guidance regarding the climbing lane or the lane for slower traffic is provided. Therefore, no guidance is provided no matter how long or short a following/leading distance to a vehicle ahead/behind is, and the first traffic lane guidance processing program is terminated. Note that, the processing in S4 is equal to the processing executed by the congestion determining means.

When it is determined that the link is not congested (S4=NO), the procedure goes to S5. The following distance and the relative speed to the vehicle ahead are detected on the basis of the detection by the front radar device 3 and the leading distance from and the relative speed to the vehicle behind are detected on the basis of the detection by the rear radar device 4. More specifically, according to FIG. 4, the following distances or leading distance and the relative speeds for both of the vehicle ahead 62 and the vehicle behind 63 are detected in S5.

Next in S6, the CPU 41 determines whether another vehicle is located to the rear of the vehicle within a predetermined distance (within 100 m in the current embodiment) on the basis of the result of the detection in S5. More specifically, in FIG. 4, it is determined whether the leading distance B between the vehicle 61 and the vehicle behind 63 is equal to or less than a predetermined distance (100 m in the current embodiment).

When it is determined that there is no vehicle to the rear of the vehicle within a predetermined distance (S6=NO), it is predictable that the vehicle is not obstructing other vehicles and that the vehicle does not need to change the traveling traffic lane to a climbing lane or a lane for slower traffic. Therefore, guidance regarding traffic lane is not provided and the first traffic lane guidance processing program is terminated.

When it is determined that another vehicle is located to the rear of the vehicle within a predetermined distance (S6=YES), it is further determined whether the distance between the vehicle and the vehicle behind is less than a predetermined distance (in the current embodiment, the predetermined distance depends on the vehicle speed (for example, 30 m in case that the vehicle is traveling at 30 km/h)) (S7). More specifically, in FIG. 4, it is determined whether the leading distance B between the vehicle 61 and the vehicle behind 63 is less than a predetermined distance (in the current embodiment, the predetermined distance depends on the vehicle speed) in S7. Note that, the processing in S7 is equal to the processing executed by the leading distance determining means.

When it is determined that the leading distance to the vehicle behind is shorter than a predetermined distance (S7=YES), it is predictable that the vehicle should change the traveling traffic lane to the climbing lane or the lane for slower traffic so as not to obstruct the vehicle behind. Therefore, the CPU 41 provides guidance regarding the climbing lane or the lane for slower traffic (S10). More specifically, an audio guidance such as "a climbing lane (the lane for slower traffic) is coming up" is output from the speaker 16 and characters or a symbol indicating the approach of the climbing lane or the lane for slower traffic is displayed on the LCD display 14. The user may easily recognize the approach of the climbing lane or the lane for slower traffic.

When it is determined that the leading distance to the vehicle behind is greater than a predetermined distance (S7=NO), it is further determined whether the vehicle speed is less than an average speed of a link in which the vehicle is currently traveling on the basis of the result of the detection in S1 and the average vehicle speed of the link stored in the link statistics DB 23 (S8).

When it is determined that the vehicle speed is less than the average speed of the link in which the vehicle is currently traveling (S8=YES), the procedure goes to S9. When it is determined that the vehicle speed is greater than the average speed of the link in which the vehicle is currently traveling (S8=NO), it is predictable that the vehicle does not need to change the traveling traffic lane to the climbing lane or the lane for slower traffic because the vehicle may not be obstructing the vehicle behind as long as the vehicle keeps its current speed. Therefore, the first traffic lane guidance processing program is terminated without providing guidance regarding traffic lanes.

In S9, the CPU 41 determines whether another vehicle is located in front of the vehicle within a predetermined distance (in the current embodiment, within 100 m) on the basis of the result of the detection in S5 and further determines whether the speed of the vehicle in front of the vehicle is equal to or less than the vehicle speed. More specifically, in FIG. 4, it is determined whether a following distance C between the vehicle ahead 62 and the vehicle 61 is equal to or less than a predetermined distance (in the current embodiment, 100 m) and whether the vehicle speed V2 of the vehicle ahead 62 is equal to or less than the vehicle speed V1 of the vehicle 61.

When it is determined that another vehicle is located in front of the vehicle within a predetermined distance and that the speed of the vehicle ahead is equal to or less than the vehicle speed (S9=YES), it is predictable that the traffic on the link is slow and that the vehicle does not need to change the traveling traffic lane to the climbing lane or the lane for slower traffic because the vehicle may not be obstructing vehicles to the rear of itself as long as the vehicle keeps its current speed. Therefore, the first traffic lane guidance processing program is terminated without providing guidance regarding a traffic lane.

When there is no vehicle in front of the vehicle within a predetermined distance or even if another vehicle is located in front of the vehicle within a predetermined distance, when the speed of the vehicle ahead is greater than the vehicle speed (S9=NO), it is predictable that the vehicle should change the traveling traffic lane to the climbing lane or the lane for slower traffic so as not to obstruct a vehicle to the rear of the vehicle. Therefore, the CPU 41 provides guidance regarding the climbing lane or the lane for slower traffic to the user (S10) .

Next, a second traffic lane guidance processing program executed by the navigation ECU 11 of the navigation system 1 will be described with reference to FIG. 5. FIG. 5 is a flowchart showing the second traffic lane guidance processing program according to the current embodiment. The second traffic lane guidance processing program is executed at predetermined intervals (for example, at 4 m intervals) after the ignition switch of the vehicle is turned on and provides guidance regarding a traffic lane if the vehicle approaches a passing lane within a predetermined distance and if certain conditions met.

In the second traffic lane guidance processing program, the CPU 41 detects the current vehicle position and the travel direction by the current position detecting section 12 in S11 and further detects the vehicle speed by counting pulses output from the vehicle speed sensor 5.

In S12, the CPU 41 determines whether the vehicle has approached a start point of a passing lane within a predetermined distance (500 m in the current embodiment) on the basis of the current vehicle position detected in S11 and map data stored in the map information DB 22. Note that, the processing in S11 and S12 is equal to the processing by the approach detecting means.

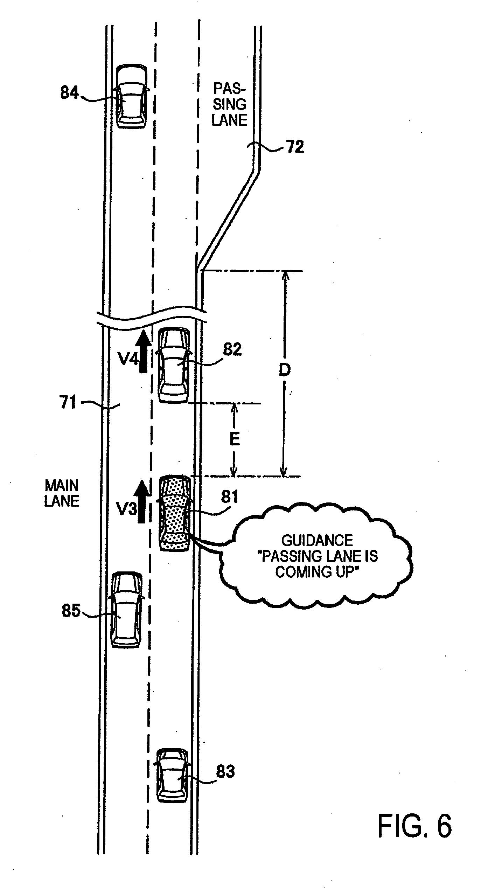

FIG. 6 is a diagram showing a frame format of a position relationship between a vehicle 81, which is traveling from a main lane 71 to a passing lane 72, and other vehicles 82 through 85, which are traveling around the vehicle 81, at a given time. In the processing of S12 described above, it is determined whether a distance D between the starting point of the passing lane 72 and the vehicle 81 is equal to or less than a predetermined distance (500 m in the current embodiment).

When it is determined that the vehicle is more than the predetermined distance away from the starting point of the passing lane (S12=NO), the procedure returns to S11 and a current vehicle position is detected again. When it is determined that the vehicle approached the starting point of the passing lane within the predetermined distance (S12=YES), the procedure goes to S13.

The CPU 41 obtains traffic information from, for example, the traffic information center through the communication device 17 in S13. Note that, traffic information obtained in S13 may include congestion information especially for specifying a congestion condition of a link.

Next in S14, the CPU 41 determines whether a link on which the vehicle is currently traveling is congested on the basis of traffic information obtained in S13. When it is determined that the link is congested (S14=YES), it is predictable that the driver of the vehicle can not change traffic lanes even if guidance regarding the passing lane is provided. Therefore, no guidance is provided no matter how long or short following/leading distances to other vehicles ahead and behind are, and the second traffic lane guidance processing program is terminated. Note that, the processing in S14 is equal to the processing executed by the congestion determining means.

When it is determined that the link is not congested (S14=NO), the procedure goes to S15. The following distance and the relative speed to the vehicle ahead are detected on the basis of the detection by the front radar device 3. More specifically, according to FIG. 6, the following distance and the relative speed to the vehicle 82 which is in front of the vehicle 81 are detected in S15.

Next in S16, the CPU 41 determines whether another vehicle is located in front of the vehicle within a predetermined distance (within 100 m in the current embodiment) on the basis of the result of the detection in S15. More specifically, in FIG. 6, it is determined whether the following distance E between the vehicle 81 and the vehicle ahead 82 is equal to or less than a predetermined distance (100 m in the current embodiment).

When it is determined that there is no vehicle in front of the vehicle within the predetermined distance (S16=NO), it is predictable that the travel of the vehicle may be not obstructed by other vehicles and that the vehicle may not need to change the traveling traffic lane to the passing lane. Therefore, the second traffic lane guidance processing program is terminated without providing guidance regarding traffic lane.

When it is determined that another vehicle is located in front of the vehicle within a predetermined distance (S16=YES), it is further determined whether the distance between the vehicle and the vehicle ahead of the vehicle is less than a predetermined distance (in the current embodiment, the predetermined distance depends on the vehicle speed (for example, 30 m in case that the vehicle travels at 30 km/h)) (S17). More specifically, in FIG. 6, it is determined whether the following distance E between the vehicle 81 and the vehicle ahead 82 is shorter than a predetermined distance (in the current embodiment, the predetermined distance depends on the vehicle speed) in S17. Note that, the processing in S17 is equal to the processing executed by the distance determining means.

When it is determined that the following distance to the vehicle ahead is shorter than the predetermined distance (S17=YES), it is predictable that the vehicle should change the traveling traffic lane to the passing lane so that the vehicle may not be obstructed by the vehicle ahead. Therefore, the CPU 41 provides guidance regarding the passing lane (S19). More specifically, an audio guidance such as "the passing lane is coming up" is output from the speaker 16 and characters or a symbol indicating the approach of the passing lane is displayed on the LCD display 14. The user may easily recognize the approach of the passing lane.

When it is determined that the following distance to the vehicle ahead is longer than the predetermined distance (S17=NO), it is further determined whether the speed of the vehicle ahead is equal to or slower than the vehicle speed on the basis of the result of the detection in S15 (S18). More specifically, in FIG. 6, it is determined whether the speed V4 of the vehicle ahead 82 is equal to or slower than the speed V3 of the vehicle 81 in S18.

When it is determined that the speed of the vehicle ahead is equal to or slower than the vehicle speed (S18=YES), it is predictable that the vehicle should change the traveling traffic lane to the passing lane because the vehicle ahead may possibly obstruct the vehicle in the future. Therefore, the CPU 41 provides guidance regarding the passing lane to the user (S19).

When it is determined that the speed of the vehicle ahead is faster than the vehicle speed (S18=NO), it is predictable that the vehicle may not need to change the traveling traffic lane to the passing lane because other vehicles may not obstruct the vehicle. Therefore, the second traffic lane guidance processing program is terminated without providing guidance regarding traffic lane.

As described in detail above, when the vehicle approaches a climbing lane or a lane for slower traffic within a predetermined distance (S2=YES), the navigation system 1 detects a distance to another vehicle near the vehicle and/or the relative speed to the vehicle (S5). When a distance between the vehicle and a vehicle in the rear of the vehicle is shorter than a predetermined distance (S7=YES) or when a distance between the vehicle and a vehicle ahead is shorter than a predetermined distance and the speed of the vehicle ahead is faster than the vehicle speed (S9=NO), guidance regarding the climbing lane or the lane for slower traffic is provided (S10). That is, it may be possible to provide guidance regarding the climbing lane or the lane for slower traffic when needed on the basis of the position relationships with other vehicles around the vehicle and the relative speeds. When the vehicle approaches a passing lane within a predetermined distance (S12=YES), the navigation system 1 detects distances and relative speeds to vehicles around the vehicle (S5). When the following distance between the vehicle and a vehicle ahead is shorter than a predetermined distance (S17=YES) or when the speed of the vehicle ahead is equal to or slower than the vehicle speed (S18=YES), guidance regarding the passing lane is provided (S19). That is, it may be possible to provide guidance regarding the passing lane when needed on the basis of the position relationships with other vehicles around the vehicle and the relative speeds. In case of that no guidance is needed, unnecessary guidance regarding traffic lanes is not provided and the driver may concentrate on driving. It may also reduce data processing burden on the navigation system 1.

When it is determined that the leading distance between the vehicle and the vehicle in the rear of the vehicle is equal to or less than a predetermined distance (S7=YES), guidance regarding the climbing lane or the lane for slower traffic is provided. Therefore, when the vehicle should change the traveling traffic lane to the climbing lane or the lane for slower traffic not to obstruct the vehicle in the rear of the vehicle, suitable guidance may be provided to the vehicle and it may increase convenience of the user.

When it is determined that a link on which the vehicle is currently traveling is congested (S4=YES, S14=YES), guidance regarding traffic lanes is not provided even when the vehicle approaches a passing lane, a climbing lane, or a lane for slower traffic within a predetermined distance. That is, when the driver does not need guidance regarding traffic lane such as when the driver can not change traffic lanes, it may be possible not to provide unnecessary guidance regarding traffic lane. As a result, the driver may concentrate on driving and it may reduce data processing burden on the navigation system 1.

Note that, the invention is not to be construed as limited to the particular embodiments disclosed.

For example, according to the current embodiment, the front radar device 3 and the rear radar device 4 detect following/leading distances to a vehicle ahead or to a vehicle behind and relative speeds to such vehicles. However, a camera for imaging an area surrounding the vehicle may be attached on the vehicle and it may be possible to detect following/leading distances and/or relative speeds on the basis of images obtained by the camera. It may also be possible to detect following/leading distances and/or relative speeds by communicating with vehicles each other.

## Claims

1. A navigation system **(1),** comprising:
map data storage means **(13)** storing map data including a roadway network;
vehicle position detecting means **(12)** configured for detecting a current vehicle position of a vehicle **(2, 61, 81);**
approach detecting means **(12)** for detecting whether the vehicle approached a passing lane **(72),** a climbing lane **(52),** or a lane for slower traffic within a predetermined distance on the basis of the current vehicle position detected by the vehicle position detecting means and map data;
traffic lane guidance means **(14, 16)** configured for providing guidance regarding the passing lane, the climbing lane, or the lane for slower traffic, provided that the approach detecting means detected that the vehicle approached the passing lane, the climbing lane, or the lane for slower traffic within the predetermined distance; and
distance detecting means **(3, 4)** configured for detecting a distance to another vehicle **(62-65, 82-85)** behind the vehicle;
wherein the traffic lane guidance means is configured to provide guidance regarding the passing lane, the climbing lane, or the lane for slower traffic on the basis of the distance detected by the distance detecting means;
**characterized in that**
the traffic lane guidance means is configured to prevent guidance in case it is detected by the distance detecting means that the vehicle is not within a predetermined distance to another vehicle behind the vehicle

2. A navigation system **(1),** comprising:
map data storage means **(13)** storing map data including a roadway network;
vehicle position detecting means **(12)** configured for detecting a current vehicle position of a vehicle **(2, 61, 81);**
approach detecting means **(12)** configured for detecting whether the vehicle approached a passing lane **(72),** a climbing lane **(52),** or a lane for slower traffic within a predetermined distance on the basis of the current vehicle position detected by the vehicle position detecting means and map data;
traffic lane guidance means **(14, 16)** configured for providing guidance regarding the passing lane, the climbing lane, or the lane for slower traffic, provided that the approach detecting means detected that the vehicle approached the passing lane, the climbing lane, or the lane for slower traffic within the predetermined distance, and:
congestion information obtaining means **(17)** configured for obtaining congestion information;
wherein the traffic lane guidance means is configured to provide guidance regarding the passing lane, the climbing lane, or the lane for slower traffic on the basis of congestion information obtained by the congestion information obtaining means;
**characterized by**
congestion determining means configured for determining whether a link in which the vehicle is currently traveling is congested on the basis of congestion information obtained by the congestion information obtaining means;
wherein the traffic lane guidance means is configured to prevent guidance regarding the passing lane, the climbing lane, or the lane for slower traffic even if the approach detecting means detects that the vehicle has approached the passing lane, the climbing lane, or the lane for slower traffic within the predetermined distance, provided that the congestion determining means determined that the link in which the vehicle is currently traveling is congested.

## Patentansprüche

1. Navigationssystem (1), mit:
einer Kartendatenspeichereinrichtung (13), die Kartendaten speichert, die ein Straßennetz umfassen;
einer Fahrzeugpositionserfassungseinrichtung (12), die eingerichtet ist, um eine aktuelle Fahrzeugposition eines Fahrzeuges (2, 61, 81) zu erfassen;
einer Annäherungserfassungseinrichtung (12), um auf der Grundlage der durch die Fahrzeugpositionserfassungseinrichtung erfassten aktuellen Fahrzeugposition und der Kartendaten zu erfassen, ob sich das Fahrzeug einer Überholspur (72), einer Kriechspur (52) oder einer Spur für langsamen Verkehr innerhalb eines vorbestimmten Abstandes angenähert hat;
einer Fahrspurführungseinrichtung (14, 16), die eingerichtet ist, um hinsichtlich der Überholspur, der Kriechspur oder der Spur für langsamen Verkehr, unter der Voraussetzung eine Führung bereitzustellen, dass die Annäherungserfassungseinrichtung erfasst, dass sich das Fahrzeug der Überholspur, der Kriechspur oder der Spur für den langsamen Verkehr innerhalb eines vorbestimmten Abstandes angenähert hat; und
einer Abstandserfassungseinrichtung (3, 4), die eingerichtet ist, um einen Abstand zu einem anderen Fahrzeug (62-65, 82-85) hinter dem Fahrzeug zu erfassen;
wobei die Fahrspurführungseinrichtung eingerichtet ist, um hinsichtlich der Überholspur, der Kriechspur oder der Spur für langsamen Verkehr auf der Grundlage des durch die Abstandserfassungseinrichtung erfassten Abstandes eine Führung bereitzustellen;
**dadurch gekennzeichnet, dass**
die Fahrspurführungseinrichtung eingerichtet ist, um eine Führung zu verhindern, falls durch die Abstandserfassungseinrichtung erfasst ist, dass sich das Fahrzeug nicht innerhalb eines vorbestimmten Abstandes zu einem anderen Fahrzeug hinter dem Fahrzeug befindet.

2. Navigationssystem (1), mit:
einer Kartendatenspeichereinrichtung (13), die Kartendaten speichert, die ein Straßennetz umfassen;
einer Fahrzeugpositionserfassungseinrichtung (12), die eingerichtet ist, um eine aktuelle Fahrzeugposition eines Fahrzeuges (2, 61, 81) zu erfassen;
einer Annäherungserfassungseinrichtung (12), die eingerichtet ist, um auf der Grundlage der durch die Fahrzeugpositionserfassungseinrichtung erfassten aktuellen Fahrzeugposition und der Kartendaten zu erfassen, ob sich das Fahrzeug einer Überholspur (72), einer Kriechspur (52) oder einer Spur für langsamen Verkehr innerhalb eines vorbestimmten Abstandes angenähert hat;
einer Fahrspurführungseinrichtung (14, 16), die eingerichtet ist, um hinsichtlich der Überholspur, der Kriechspur oder der Spur für langsamen Verkehr, unter der Voraussetzung eine Führung bereitzustellen, dass die Annäherungserfassungseinrichtung erfasst, dass sich das Fahrzeug der Überholspur, der Kriechspur oder der Spur für den langsamen Verkehr innerhalb eines vorbestimmten Abstandes angenähert hat; und mit:
einer Verkehrsstörungsinformationsgewinnungseinrichtung (17), die eingerichtet ist, um Verkehrsstörungsinformationen zu gewinnen;
wobei die Fahrspurführungseinrichtung eingerichtet ist, um auf der Grundlage der durch die Verkehrsstörungsinformationsgewinnungseinrichtung gewonnenen Verkehrsstörungsinformationen hinsichtlich der Überholspur, der Kriechspur oder der Spur für langsamen Verkehr eine Führung bereitzustellen;
**gekennzeichnet durch**
eine Verkehrsstörungsbestimmungseinrichtung, die eingerichtet ist, um auf der Grundlange von **durch** die Verkehrsstörungsinformationsgewinnungseinrichtung gewonnenen Verkehrsstörungsinformationen zu bestimmen, ob ein Verbindungsstück in dem sich das Fahrzeug aktuell fortbewegt eine Verkehrsstörung aufweist;
wobei die Fahrspurführungseinrichtung eingerichtet ist, um hinsichtlich der Überholspur, der Kriechspur oder der Spur für langsamen Verkehr eine Führung zu verhindern, sogar wenn die Annäherungserfassungseinrichtung erfasst, dass sich das Fahrzeug der Überholspur, der Kriechspur oder der Spur für den langsamen Verkehr innerhalb des vorbestimmten Abstandes angenähert hat, unter der Voraussetzung, dass die Verkehrsstörungsbestimmungseinrichtung bestimmt, dass das Verbindungsstück in dem sich das Fahrzeug aktuell fortbewegt eine Verkehrsstörung aufweist.

## Revendications

1. Système (1) de navigation, comprenant:
un moyen (13) de stockage de données cartographiques stockant des données cartographiques qui comportent un réseau routier;
un moyen (12) de détection de la position d'un véhicule configuré pour détecter une position actuelle d'un véhicule (2, 6, 81);
un moyen (12) de détection d'approche pour détecter si le véhicule s'est rapproché d'une voie de dépassement (72), d'une voie pour véhicules lents (52), ou d'une voie destinée au trafic plus lent dans une distance prédéterminée sur la base de la position actuelle du véhicule détectée par le moyen de détection de la position du véhicule et des données cartographiques;
un moyen (14, 16) de guidage sur la voie de circulation configuré pour apporter un guidage concernant la voie de dépassement, la voie pour véhicules lents, ou la voie destinée au trafic plus lent, à condition que le moyen de détection d'approche ait détecté que le véhicule s'est rapproché de la voie de dépassement, de la voie pour véhicules lents, ou de la voie destinée au trafic plus lent à l'intérieur de la distance prédéterminée; et
un moyen (3, 4) de détection de la distance configuré pour détecter une distance par rapport à un autre véhicule (62-65, 82-85) derrière le véhicule;
où le moyen de guidage sur la voie de circulation est configuré pour apporter un guidage concernant la voie de dépassement, la voie pour véhicules lents, ou la voie destinée au trafic plus lent sur la base de la distance détectée par le moyen de détection de la distance;
**caractérisé en ce que**
le moyen de guidage sur la voie de circulation est configuré afin d'empêcher le guidage dans le cas où le moyen de détection de la distance détecte que le véhicule ne se trouve pas dans une distance prédéterminée par rapport à un autre véhicule qui se trouve derrière lui.

2. Système (1) de navigation, comprenant:
un moyen (13) de stockage de données cartographiques stockant des données cartographiques comprenant un réseau routier;
un moyen (12) de détection de la position d'un véhicule configuré pour détecter une position actuelle d'un véhicule (2, 6, 81);
un moyen (12) de détection d'approche configuré pour détecter si le véhicule s'est rapproché d'une voie de dépassement (72), d'une voie pour véhicules lents (52), ou d'une voie destinée au trafic plus lent dans une distance prédéterminée sur la base de la position actuelle du véhicule détectée par le moyen de détection de la position du véhicule et des données cartographiques;
un moyen (14, 16) de guidage sur la voie de circulation configuré pour apporter un guidage concernant la voie de dépassement, la voie pour véhicules lents, ou la voie destinée au trafic plus lent, à condition que le moyen de détection d'approche ait détecté que le véhicule s'est rapproché de la voie de dépassement, de la voie pour véhicules lents, ou de la voie destinée au trafic plus lent dans la distance prédéterminée; et
un moyen (17) d'obtention d'informations sur l'encombrement configuré pour obtenir des informations sur l'encombrement;
où le moyen de guidage sur la voie de circulation est configuré pour apporter un guidage concernant la voie de dépassement, la voie pour véhicules lents, ou la voie destinée au trafic plus lent sur la base des informations sur l'encombrement obtenues par le moyen d'obtention d'informations sur l'encombrement;
**caractérisé par**
un moyen de détermination de l'encombrement configuré pour déterminer si une bretelle dans laquelle le véhicule se déplace actuellement est congestionnée sur la base des informations sur l'encombrement obtenues par le moyen d'obtention d'informations sur l'encombrement;
où le moyen de guidage sur la voie de circulation est configuré afin d'empêcher le guidage concernant la voie de dépassement, la voie pour véhicules lents, ou la voie destinée au trafic plus lent même si le moyen de détection d'approche détecte que le véhicule s'est rapproché de la voie de dépassement, de la voie pour véhicules lents, ou de la voie destinée au trafic plus lent dans la distance prédéterminée, à condition que le moyen de détermination de l'encombrement ait déterminé que la bretelle dans laquelle le véhicule se déplace actuellement est congestionnée.
